# EUROPEAN PATENT APPLICATION

(11) **EP 4 815 090 A1**
(43) Date of publication of application: **30.09.2026**
(21) Application number: 24894079.3
(22) Date of filing: 15.11.2024
(51) Int. Cl.: H01M 10/0562, H01B 1/06, H01B 13/00, H01M 50/44, H01M 50/437, H01M 50/489

(54) **SOLID ELECTROLYTE SHEET, METHOD FOR PRODUCING SAME, AND ALL-SOLID-STATE BATTERY HAVING SAID SOLID ELECTROLYTE SHEET**

(30) Priority: 24.11.2023 JP 2023199023
(71) Applicant: MITSUBISHI GAS CHEMICAL COMPANY, INC., Chiyoda-ku Tokyo 100-8324 (JP); National Institute of Advanced Industrial Science and Technology, Chiyoda-ku Tokyo 100-8921 (JP)
(72) Inventor: SHIMANAKA Akira, Niigata-shi, Niigata 950-3112 (JP); NOGUCHI Keita, Hiratsuka-shi, Kanagawa 254-0016 (JP); SENOH Hiroshi, Tsukuba-shi, Ibaraki 305-8560 (JP); MUKAI Takashi, Tsukuba-shi, Ibaraki 305-8560 (JP); YAMASHITA Naoto, Tsukuba-shi, Ibaraki 305-8560 (JP)
(74) Representative: Vossius & Partner Patentanwälte Rechtsanwälte mbB
(86) International application number: PCT/JP2024/040546
(87) International publication number: WO 2025/110088

(57) **Abstract**

The present invention makes it possible to provide a solid electrolyte sheet to be used as a separator layer that separates a positive electrode layer from a negative electrode layer in an all-solid-state battery, the solid electrolyte sheet comprising a support base material and a boron cluster-type solid electrolyte. Furthermore, the present invention makes it possible to provide a method for producing a solid electrolyte sheet, the method comprising a step for preparing a solid electrolyte solution obtained by dissolving a boron cluster-type solid electrolyte in a solvent, and a step for obtaining a solid electrolyte sheet by applying the obtained solid electrolyte solution to a support base material and then drying the result, wherein the solvent contains at least one substance selected from the group consisting of water, alcohol-based solvents, tetrahydrofuran, acetonitrile, toluene, N-methylpyrrolidone, dimethyl carbonate, and ethyl acetate.

## Description

### TECHNICAL FIELD

The present invention relates to a solid electrolyte sheet, a method for producing the same, and an all-solid-state battery having said solid electrolyte sheet.

### BACKGROUND ART

Recently, a demand for lithium ion secondary batteries has been increased in applications including portable information terminals, portable electronic equipments, electric vehicles, hybrid electric vehicles and stationary power storage systems. However, currently, a flammable organic solvent is used as an electrolytic solution in lithium ion secondary batteries, and a strong exterior is required so that an organic solvent does not leak out. Further, for example, in the case of portable personal computers, it is necessary to employ a structure against a risk at the time when an electrolytic solution leaks out. Thus, there is a limitation on structures of devices.

Moreover, the range of applications thereof has been widened to movable bodies such as vehicles and aircrafts, and a high capacity is desired for stationary lithium ion secondary batteries. Under such circumstances, importance tends to be placed on safety more than before, and efforts are concentrated on the development of an all-solid-state lithium ion secondary battery in which none of toxic substances such as organic solvents is used.

For example, use of an oxide, phosphate compound, organic polymer, sulfide, complex hydride or the like as a solid electrolyte in an all-solid-state lithium ion secondary battery has been examined.

All-solid-state batteries are broadly classified into the thin film type and the bulk type. In the case of the thin film type, interface bonding is ideally formed by utilizing gas phase film formation, but the electrode layer is thin (several µm), the electrode area is small, the amount of energy which can be stored per cell is small, and the cost is high. Therefore, it is inappropriate as a battery for large electrical storage devices or electric vehicles, wherein a large amount of energy must be stored. Meanwhile, in the case of the bulk type, the thickness of the electrode layer can be adjusted to be several tens µm to 100 µm, and it is possible to prepare an all-solid-state battery having a high energy density.

Among solid electrolytes, a sulfide solid electrolyte and a complex hydride have characteristics that they have high ionic conductivity and are relatively soft, and that therefore it is easy to form the interface between solids. They are also stable against metallic lithium, and the development thereof as practical solid electrolytes has been promoted.

However, in methods for producing all-solid-state batteries using these solid electrolytes, all-solid-state batteries are prepared by techniques using pressing that requires a high pressure, and for this reason, the production of large electrodes is limited, and there is a problem of difficulty in interface bonding. Further, since sulfide solid electrolytes and complex hydride solid electrolytes are unstable against moisture and therefore require special environments such as an inert gas atmosphere or a dry room with an ultra-low dew point, it has been desired that all-solid-state batteries can be produced using an equipment that enables the production in a small space.

To address this problem, it is disclosed that a good interface can be formed at a low press pressure by applying a solution of solid electrolyte to the mating surfaces of a positive electrode layer and a negative electrode layer and laminating the layers together (Patent Document 1). However, the positive electrode layer and the negative electrode layer themselves are required to be molded at a high press pressure, and there is a problem that when a sulfide solid electrolyte is dissolved in an alcohol solvent, the sulfide solid electrolyte gradually decomposes and hydrogen sulfide is generated. In addition, a short circuit may occur during discharge, and it has been desired to improve cycle performance.

### PRIOR ART DOCUMENTS

### PATENT DOCUMENTS

Patent Document 1: Japanese Laid-Open Patent Publication No. 2015-2080

### SUMMARY OF THE INVENTION

### PROBLEMS TO BE SOLVED BY THE INVENTION

Under such circumstances, it has been desired to provide a solid electrolyte sheet having excellent processability and a low risk of a short circuit, a method for producing the same, and an all-solid-state battery having the solid electrolyte sheet.

### MEANS FOR SOLVING THE PROBLEMS

The present inventors diligently made researches in view of the above-described problems and found that the problems can be solved by a solid electrolyte sheet including a support base material and a boron cluster-type solid electrolyte.

Specifically, the present invention is as follows:
<1> A solid electrolyte sheet to be used as a separator layer that separates a positive electrode layer from a negative electrode layer in an all-solid-state battery, the solid electrolyte sheet comprising a support base material and a boron cluster-type solid electrolyte.
<2> The solid electrolyte sheet according to item <1>, wherein the support base material is a glass nonwoven fabric.
<3> The solid electrolyte sheet according to item <1> or <2>, wherein the thickness of the support base material is 10 µm to 300 µm.
<4> The solid electrolyte sheet according to any one of items <1> to <3>, wherein the boron cluster-type solid electrolyte is a solid electrolyte composite comprising LiCB₉H₁₀ and LiCB₁₁H₁₂, and wherein the molar ratio of LiCB₉H₁₀/LiCB₁₁H₁₂ is 1.1 to 20.
<5> The solid electrolyte sheet according to item <4>, wherein the boron cluster-type solid electrolyte is a solid electrolyte composite comprising LiCB₉H₁₀ and LiCB₁₁H₁₂, and wherein the molar ratio of LiCB₉H₁₀:LiCB₁₁H₁₂ is 7:3.
<6> An all-solid-state battery in which a positive electrode layer, a separator layer, and a negative electrode layer are laminated in this order, wherein the separator layer is the solid electrolyte sheet according to any one of items <1> to <5>.
<7> A method for producing a solid electrolyte sheet, the method comprising:
   a step of preparing a solid electrolyte solution obtained by dissolving a boron cluster-type solid electrolyte in a solvent; and
   a step of obtaining a solid electrolyte sheet by applying the obtained solid electrolyte solution to a support base material, followed by drying,
   wherein the solvent contains at least one substance selected from the group consisting of water, an alcohol-based solvent, tetrahydrofuran, acetonitrile, toluene, N-methylpyrrolidone, dimethyl carbonate, and ethyl acetate.
<8> The method according to item <7>, wherein the support base material is a glass nonwoven fabric.
<9> The method according to item <7> or <8>, wherein the thickness of the support base material is 10 µm to 300 µm.
<10> The method according to any one of items <7> to <9>, wherein the boron cluster-type solid electrolyte is a solid electrolyte composite comprising LiCB₉H₁₀ and LiCB₁₁H₁₂, and wherein the molar ratio of LiCB₉H₁₀/LiCB₁₁H₁₂ is 1.1 to 20.
<11> The method according to item <10>, wherein the boron cluster-type solid electrolyte is a solid electrolyte composite comprising LiCB₉H₁₀ and LiCB₁₁H₁₂, and wherein the molar ratio of LiCB₉H₁₀:LiCB₁₁H₁₂ is 7:3.
<12> The method according to any one of items <7> to <11>, wherein the solid content concentration of the solid electrolyte solution is 5% by mass to 70% by mass.
<13> The method according to any one of items <7> to <12>, wherein said drying is carried out at 40°C to 200°C for 30 minutes to 5 hours under atmospheric pressure, and further at 100°C to 300°C for 1 to 30 hours under vacuum.
<14> The method according to any one of items <7> to <13>, the method comprising a step of rolling and densifying the support base material using a roll press after said drying.

### ADVANTAGEOUS EFFECT OF THE INVENTION

According to the present invention, it is possible to provide a solid electrolyte sheet having excellent processability and a low risk of a short circuit, a method for producing the same, and an all-solid-state battery having the solid electrolyte sheet.

### BRIEF DESCRIPTION OF THE DRAWINGS

FIG. 1 shows charging and discharging curves of the all-solid-state battery prepared in Example 1.
FIG. 2 shows cycle characteristics of the all-solid-state battery prepared in Example 1.
FIG. 3 shows charging and discharging curves of the Li battery prepared in Comparative Example 1.
FIG. 4 shows charging and discharging curves of the all-solid-state battery prepared in Comparative Example 2.

### EMBODIMENTS FOR CARRYING OUT THE INVENTION

Hereinafter, the solid electrolyte sheet, the method for producing the same, and the all-solid-state battery having the solid electrolyte sheet of the present invention will be specifically described. Note that materials, constitutions, etc. described below do not limit the present invention and can be modified variously within the range of the gist of the present invention. In this specification, when a numerical range is shown using "-(to)", the range includes numerical values at the both sides of "- (to)".

### [Solid Electrolyte Sheet]

The solid electrolyte sheet of the present invention is used as a separator layer that separates a positive electrode layer from a negative electrode layer in an all-solid-state battery, and includes a support base material and a boron cluster-type solid electrolyte.

The solid electrolyte sheet of the present invention can be prepared by impregnating a support base material into which solutions can permeate with a solid electrolyte solution in which a boron cluster-type solid electrolyte is dissolved, and then removing the solvent to precipitate the solid electrolyte inside and on the surface of the support base material.

### <Support Base Material>

Since the solid electrolyte sheet of the present invention plays a role as a separator layer that separates a positive electrode layer from a negative electrode layer, the support base material is required to have high insulation properties, and though there is no particular limitation, it is possible to use a separator to be used for electrolytic solutions. Examples thereof include a glass nonwoven fabric, a glass fiber filter, a polyolefin-based separator, a cellulose-based separator, and a nonwoven fabric-based separator other than the glass nonwoven fabric. Among them, separators have a void ratio of preferably 40% to 95%, and more preferably 70 to 95%. This is because, since the solid electrolyte is formed in void portions, the ratio of the solid electrolyte serving as an ion conductor is increased. Further, the heat-resistant temperature is preferably 200°C or higher, and from the viewpoint of heat resistance, a glass nonwoven fabric that does not contain an organic binder is desirable, but it may contain an organic binder depending on the type thereof.

The thickness of the support base material to be used in the present invention is preferably 10 µm to 300 µm, and more preferably 50 µm to 200 µm.

### <Boron Cluster-Type Solid Electrolyte>

A boron cluster-type solid electrolyte is one of complex hydrides, and is a compound having a cluster structure with boron as the basic skeleton. In general, when this cluster structure is closed (cage-shaped), it shows high stability against water and alcohol. Specific examples of the boron cluster-type solid electrolyte include LiCB₉H₁₀, LiCB₁₁H₁₂, and Li₂B₁₂H₁₂. Among them, boron cluster-type solid electrolytes having carbon in the skeleton are preferred because they tend to have high ionic conductivity. Examples of such compounds include, but are not limited to, LiCB₉H₁₀ and LiCB₁₁H₁₂. The chemical structures of LiCB₉H₁₀ and LiCB₁₁H₁₂ are shown below.

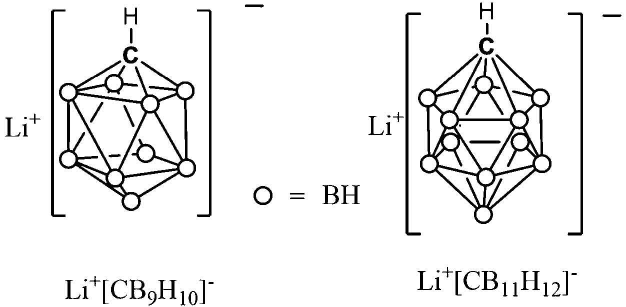

The boron cluster-type solid electrolyte to be used in the present invention is preferably a solid electrolyte composite including LiCB₉H₁₀ and LiCB₁₁H₁₂, wherein the molar ratio of LiCB₉H₁₀/LiCB₁₁H₁₂ is 1.1 to 20 (more preferably 1.25 to 10, and even more preferably 1.5 to 9).

In Raman spectroscopy, the above-described solid electrolyte composite preferably has peaks respectively at 749 cm⁻¹ (±5 cm⁻¹) that is based on LiCB₉H₁₀ and 763 cm⁻¹ (±5 cm⁻¹) that is based on LiCB₁₁H₁₂. The solid electrolyte composite may have peaks in other regions, but peaks showing the respective characteristics thereof are as described above.

In the present invention, the boron cluster-type solid electrolyte is particularly preferably a solid electrolyte composite including LiCB₉H₁₀ and LiCB₁₁H₁₂, wherein the molar ratio of LiCB₉H₁₀:LiCB₁₁H₁₂ is 7:3. By mixing them at a molar ratio of LiCB₉H₁₀:LiCB₁₁H₁₂ = 7:3, a high ion conductor (>1 mS/cm) can be formed.

As LiCB₉H₁₀ and LiCB₁₁H₁₂ as raw materials, usually commercially available products can be used. Further, the purity thereof is preferably 95% or more, and more preferably 98% or more. By using compounds having a purity within the above-described range, a desired crystal tends to be easily obtained.

LiCB₉H₁₀ and LiCB₁₁H₁₂ can be mixed with each other in a homogeneous solvent in the atmosphere.

Regarding the method for mixing, it can be carried out in a solvent. The solvent is not particularly limited, and examples thereof include water, a nitrile-based solvent such as acetonitrile, an ether-based solvent such as tetrahydrofuran and diethyl ether, N,N-dimethylformamide, N,N-dimethylacetamide, an alcohol-based solvent such as methanol, ethanol, and propanol, acetone, ethyl acetate, methyl acetate, toluene, methylene chloride, and chloroform. Among these solvents, water and an alcohol-based solvent such as ethanol and isopropanol are particularly preferred in terms of safety, and water is more preferred. As the alcohol-based solvent, those having 3 or less carbon atoms are more preferred.

For example, LiCB₉H₁₀ and LiCB₁₁H₁₂ are mixed using water as the solvent, and the water is distilled away from the mixed aqueous solution using an evaporator, thereby obtaining a compound in which LiCB₉H₁₀ and LiCB₁₁H₁₂ are mixed at a predetermined molar ratio. The time for distilling off the solvent and drying powder varies depending on the type of the solvent, and the drying time is shorter when an alcohol-based solvent is used.

### [Method for Producing Solid Electrolyte Sheet]

The method for producing a solid electrolyte sheet of the present invention includes: (1) a step of preparing a solid electrolyte solution obtained by dissolving a boron cluster-type solid electrolyte in a solvent; and (2) a step of obtaining a solid electrolyte sheet by applying the obtained solid electrolyte solution to a support base material, followed by drying.

### <Step of Preparing Solid Electrolyte Solution>

In the step of preparing a solid electrolyte solution of the present invention, a boron cluster-type solid electrolyte is dissolved in a solvent to prepare a solid electrolyte solution.

As the boron cluster-type solid electrolyte to be used in the step, the above-described one is used, and preferred examples thereof are the same.

The solvent to be used in the step contains at least one substance selected from the group consisting of water, an alcohol-based solvent, tetrahydrofuran, acetonitrile, toluene, N-methylpyrrolidone, dimethyl carbonate, and ethyl acetate, and among them, methanol, tetrahydrofuran, and acetonitrile are preferably used, and methanol is more preferably used.

The method for preparing a solid electrolyte solution is not particularly limited as long as the solid electrolyte solution can be obtained. For example, in the case of using a solid electrolyte composite of LiCB₉H₁₀ and LiCB₁₁H₁₂, an aqueous solution of LiCB₉H₁₀ and an aqueous solution of LiCB₁₁H₁₂ are mixed and dried to obtain a powder of a solid electrolyte composite, and then the powder is dissolved in methanol, thereby obtaining a solid electrolyte solution. Alternatively, a solid electrolyte solution may be obtained by mixing a methanol solution of LiCB₉H₁₀ and a methanol solution of LiCB₁₁H₁₂. Also, in the case of using other solid electrolytes, a solid electrolyte solution can be prepared in the same manner. Further, the specific solvents described above are merely examples, and do not preclude the use of other solvents.

The solid content concentration (concentration of the solid electrolyte) in the solid electrolyte solution is preferably 5% by mass to 70% by mass, although the optimum value thereof varies depending on the types of the boron cluster-type solid electrolyte and the solvent, so that the viscosity becomes optimum when applied to the support base material. When the concentration is lower than this range, the precipitation efficiency of the solid electrolyte may be deteriorated. Meanwhile, when the concentration is higher, there is concern that the viscosity increases and it becomes difficult to carry out impregnation to the bottoms of pores. The solid content concentration in the solid electrolyte solution is more preferably 20% by mass to 60% by mass, and even more preferably 30% by mass to 50% by mass.

### <Step of Applying to Support Base Material and Drying>

In the step of applying to a support base material and drying of the present invention, a solid electrolyte sheet is obtained by applying the solid electrolyte solution obtained in the step of preparing a solid electrolyte solution described above to a support base material, followed by drying.

As the support base material to be used in the step, the above-described one is used, and preferred examples thereof are the same.

As the method for applying the solid electrolyte solution to the support base material, a publicly-known method for applying an electrolytic solution to an electrode sheet to carry out impregnation can be used. Examples thereof include the doctor blade method, the spin coating method, and the spray coating method. Preferably, the solid electrolyte solution is dropped onto the support base material and uniformly applied thereto by wire coating.

In the solid electrolyte sheet, the solid electrolyte is contained at a ratio of preferably 40 to 90% by mass, more preferably 45 to 85% by mass, and particularly preferably 50 to 80% by mass relative to the total mass of the support base material and the solid electrolyte.

After the solid electrolyte solution is applied to the support base material, drying is carried out to remove the solvent and precipitate the solid electrolyte, and voids of the support base material are densely filled with the solid electrolyte.

Preferably, the aforementioned drying is carried out at 40°C to 200°C (more preferably 120°C to 180°C) for 30 minutes to 5 hours (more preferably 1 to 3 hours) under atmospheric pressure, and further at 100°C to 300°C (more preferably 150°C to 200°C) for 1 to 30 hours (more preferably 20 to 25 hours) under vacuum. By carrying out the above-described drying, the solvent can be efficiently volatilized and the solid electrolyte can be precipitated. When the solvent is volatilized at a temperature higher than this range, there is concern that a side reaction may occur or the solvent may foam, resulting in preventing the solid electrolyte from being densely precipitated. Further, heating under an inert gas stream or under vacuum can promote the volatilization of the solvent.

In the present invention, it is preferred to include a step of rolling and densifying the support base material using a roll press after said drying.

The method for rolling using a roll press (roll pressing method) has high continuous productivity, but the pressing pressure in this case is lower than those of the uniaxial pressing method and isostatic pressing method. Since the solid electrolyte precipitated from the solid electrolyte solution is relatively dense and the boron cluster-type solid electrolyte is soft, the solid electrolyte can be sufficiently densified by rolling at a low pressing pressure.

The pressing pressure in the roll pressing method is preferably 0.1 MPa to 100 MPa, and more preferably 1 MPa to 80 MPa. For forming conventional all-solid-state batteries, very high pressing pressures are required in order to deform and densify powder itself, but in the present invention, since the solid electrolyte is formed densely in the voids of the support base material by precipitating the solid electrolyte from the solid electrolyte solution, it is not required to apply a high pressing pressure such as 300 MPa that deforms particles. In a preferred aspect of the present invention, the purpose of rolling after drying is to fill small cracks generated by expansion/shrinkage due to thermal change and small voids generated at the time of volatilization of the solvent, and sufficient effects can be obtained by the roll pressing method.

### [All-Solid-State Battery]

In the all-solid-state battery of the present invention, a positive electrode layer, a separator layer, and a negative electrode layer are laminated in this order, and the separator layer is the solid electrolyte sheet of the present invention. Note that the positive electrode layer and the negative electrode layer are collectively referred to as the electrode layer.

As the electrode layer to be used in the present invention, it is possible to use an electrode layer for lithium-ion batteries using an electrolytic solution. In the present invention, a positive electrode sheet in which a positive electrode layer is formed on a current collector and a negative electrode sheet in which a negative electrode layer is formed on a current collector can be used. Note that the positive electrode sheet and the negative electrode sheet are collectively referred to as the electrode sheet.

The positive electrode layer is usually formed with a positive electrode active material, a binder and a conduction assisting agent, and the negative electrode layer is usually formed with a negative electrode active material, a binder and a conduction assisting agent. These electrode layers have voids and can be impregnated with an electrolytic solution. Note that it is possible to employ a constitution in which a metal foil or alloy foil is used for either the positive electrode layer or the negative electrode layer and the electrode sheet including a boron cluster-type solid electrolyte to be used in the present invention is used for the other electrode.

As the current collector, in general, a stainless steel foil or aluminum foil is used for the positive electrode layer, and a stainless steel foil or copper foil is used for the negative electrode layer. Note that a current collector whose surface is carbon-coated can also be used.

The positive electrode active material to be contained in the positive electrode layer is not particularly limited as long as it is a material which can release lithium ions at the time of charging and can absorb lithium ions at the time of discharging. Examples thereof include a metal oxide having a transition metal, a sulfur-based positive electrode active material, an organic positive electrode active material, and FeF₃ and VF₃ utilizing a conversion reaction. In the present invention, the electric potential of the positive electrode active material with reference to lithium is preferably 3.0 V or less because in this case, a reaction at the interface between an active material and a boron cluster-type solid electrolyte is suppressed, resulting in smaller interface resistance. The electric potential of the positive electrode active material with reference to lithium is more preferably 1.0 to 2.7 V.

As the metal oxide having a transition metal, it is possible to use particles or a thin film of a metal oxide containing lithium and at least one of Mn, Co, Ni, Fe, Cr and V that are transition metals. Specific examples thereof include, but are not particularly limited to, LiCoO₂, LiCo₂O₄, LiMnO₂, LiMn₂O₄, LiMnCoO₄, Li₂MnCoO₄, LiNi_{0.8}Co_{0.15}Al_{0.05}O₂, LiNi_{0.5}Mn_{0.5}O₂, Li₂NiMn₃O₈, LiVO₂, LiV₃O₃, LiCrO₂, LiFePO₄, LiCoPO₄, LiMnPO₄, LiVOPO₄, LiNiO₂, LiNi₂O₄, LiNi_{1/3}Co_{1/3}Mn_{1/3}O₂, Li₂FeSiO₄, Li₂MnSiO₄ and LiFeBO₃. Further, Fe₂O₃, Cr₃O₈, V₂O₅, MnO₂, etc. can also be used. Among them, LiCoO₂, LiMnO₂, LiMn₂O₄, LiNi_{0.8}Co_{0.15}Al_{0.05}O₂, LiNi_{0.5}Mn_{0.5}O₂, Li₂NiMn₃O₈, LiFePO₄, LiCoPO₄, LiMnPO₄, LiVOPO₄, LiNiO₂ and LiNi_{1/3}Co_{1/3}Mn_{1/3}O₂ are preferred.

Regarding these positive electrode active materials, it is possible to provide a coating layer to the particles or thin film of the positive electrode active materials for the purpose of suppressing a reaction with a solid electrolyte. Examples of the coating layer include LiNbO₃, Li₄Ti₅O₁₂, LiTaO₃, LiNbO₃, LiAlO₂, Li₂ZrO₃, Li₂WO₄, Li₂TiO₃, Li₂B₄O₇, Li₃PO₄, Li₂MoO₄ and LiBO₂.

Specific examples of the sulfur-based positive electrode active material include, but are not particularly limited to, S, a sulfur-carbon composite, TiS₂, TiS₃, TiS₄, NiS, NiS₂, CuS, FeS₂, Li₂S, MoS₃, a sulfur-modified polyacrylonitrile, rubeanic acid (dithiooxamide), and a disulfide compound. Among them, TiS₂, TiS₃, TiS₄, NiS, NiS₂, FeS₂, Li₂S, MoS₃, a sulfur-modified polyacrylonitrile, a sulfur-carbon composite, and rubeanic acid (dithiooxamide) are preferred.

Specific examples of the organic positive electrode active material include, but are not particularly limited to, a radical compound typified by 2,2,6,6-tetramethylpiperidinoxyl-4-ylmethacrylate and polytetramethylpiperidinoxy vinyl ether, a quinone compound, a radialene compound, tetracyanoquinodimethane, and phenazine oxide. Among them, a radical compound and a quinone compound are preferred because these compounds have a large theoretical capacity and can maintain a discharge capacity at a relatively good level.

As the negative electrode active material to be contained in the negative electrode layer, for example, a Si-based negative electrode material, a metal active material, and a carbon-based active material can be used. Examples of the Si-based negative electrode material include Si, SiO, and a composite material of Si-C. Examples of the metal active material include Li₄Ti₅O₁₂, Li, In, Al, Sn, and alloys of these metals. Examples of the carbon-based active material include mesocarbon microbeads (MCMB), a highly oriented graphite (HOPG), a hard carbon, and a soft carbon. In particular, it is preferred to use an active material having a lower equilibrium potential as the negative electrode because the energy density of the battery is improved to increase the operating voltage. Examples of such negative electrode active materials include Li, a carbon-based active material, and a Si-based negative electrode material.

The binder to be used for the positive electrode layer is not particularly limited, but for example, a polyimide-based material, an acrylic material, polysiloxane, polyalkylene glycol, polyvinylidene fluoride (PVdF), polytetrafluoroethylene (PTFE), an ethylene-vinyl alcohol copolymer (EVOH), etc. can be used. According to need, a thickener such as carboxymethyl cellulose (CMC) can also be used.

The binder to be used for the negative electrode layer is not particularly limited, but for example, a polyimide-based material, polysiloxane, polyalkylene glycol, polyvinylidene fluoride (PVdF), polytetrafluoroethylene (PTFE), styrene-butadiene rubber (SBR), an acrylic material, etc. can be used. According to need, a thickener such as carboxymethyl cellulose (CMC) can also be used.

The conduction assisting agent to be used for the electrode layer is not particularly limited as long as it has desired conductivity. Examples thereof include a conduction assisting agent made of a carbon material. Specific examples thereof include carbon black, acetylene black, Ketjen black, and carbon fiber. Further, cellulose nanofiber obtained by using a plant as a raw material, etc. can also be used.

As the method for preparing the electrode sheet, a publicly-known method can be used. For example, the positive electrode active material or negative electrode active material is mixed with the binder, the conduction assisting agent and an organic solvent to prepare a coating solution. The current collector is coated with the coating solution using the doctor blade method, spin coating method, spray coating method or the like, followed by drying, thereby preparing the electrode sheet, wherein the electrode layer is formed on the current collector.

The all-solid-state battery can be prepared by layering respective sheets, followed by rolling.

In the present invention, it is preferred to include a step in which, for example, the negative electrode layer is bonded to the solid electrolyte sheet and then the solid electrolyte sheet is further bonded to the positive electrode layer in a manner such that the solid electrolyte sheet is positioned between the positive electrode layer and the negative electrode layer. The pressing pressure for bonding the negative electrode layer to the solid electrolyte sheet and the pressing pressure for bonding the solid electrolyte sheet to the positive electrode layer are preferably 0.001 MPa to 100 MPa, more preferably 1 MPa to 80 MPa, and particularly preferably 10 MPa to 60 MPa.

The boron cluster-type solid electrolyte has an ability as a binder, and therefore has a high effect of bonding these sheets. As the rolling method, for example, the roll pressing method can be employed.

### EXAMPLES

Hereinafter, the embodiments of the present invention will be more specifically described by way of examples, but the embodiments are not limited to the examples.

### (Example 1)

### <Synthesis of Boron Cluster-Type Solid Electrolyte>

An aqueous solution of LiCB₉H₁₀ and an aqueous solution of LiCB₁₁H₁₂ were prepared, and the aqueous solutions were mixed to have a molar ratio of 7:3. Next, the water in the mixed aqueous solution was distilled off using an evaporator. Hereinafter, the compound in which LiCB₉H₁₀ and LiCB₁₁H₁₂ are mixed at a molar ratio of 7:3 (boron cluster-type solid electrolyte) is referred to as "LCBH".

### <Preparation of Solid Electrolyte Solution>

Methanol was added to LCBH prepared above so that the solid content concentration became 40 wt%, and an LCBH/MeOH solution (solid electrolyte solution) was prepared by manual stirring.

### <Preparation of Solid Electrolyte Sheet>

The LCBH/MeOH solution obtained above was dropped onto a glass nonwoven fabric-based support base material (manufactured by ADVANTEC, GC-50, thickness: 190 µm) and uniformly applied thereto by wire coating to perform permeation into the inside. At the same time, the excess portion of the LCBH/MeOH solution was removed. Next, using a constant temperature dryer, preliminary drying was carried out at 160°C for 2 hours under atmospheric pressure. After that, in a vacuum constant temperature dryer, vacuum heating and drying was carried out at 180°C for 15 hours under vacuum to prepare a solid electrolyte sheet. The mass per unit area of the glass nonwoven fabric-based support base material alone was 5.05 mg/cm², while the mass per unit area of the solid electrolyte sheet obtained by applying the LCBH/MeOH solution and carrying out drying was 12.79 mg/cm². That is, the solid electrolyte was contained at a ratio of about 60% by mass relative to the total mass of the support base material and the solid electrolyte.

### <Densification of Solid Electrolyte Sheet>

In order to densify the solid electrolyte sheet obtained above, roll pressing was carried out without heating, using a desktop hot roll press machine (manufactured by Hohsen Corporation, HSPR-60150HL-A), with a pressing pressure of 50 MPa and a slit width between the rolls of 50 µm. Note that the above-described steps of <Preparation of Solid Electrolyte Solution>, <Preparation of Solid Electrolyte Sheet>, and <Densification of Solid Electrolyte Sheet> were all carried out in a dry environment with a dew point of -60°C or lower.

### <Preparation of Negative Electrode Slurry>

For preparing a negative electrode slurry, SiO (carbon-coated powder with an average particle size of 6 µm) was used as the negative electrode active material, a polyimide-based binder (manufactured by UBE Corporation, U-Varnish A) was used as the binder, and acetylene black (manufactured by Denka Company Limited, DENKA BLACK Li-100) was used as the conduction assisting agent. Each material was weighed to achieve a composition of SiO: acetylene black: polyimide-based binder = 80:5:15 wt%, and the materials were kneaded with a N-methyl-2-pyrrolidone (NMP) solvent using a planetary centrifugal mixer (manufactured by Thinky Corporation, ARE-310) at 2000 rpm for 20 minutes to prepare the negative electrode slurry.

### <Preparation of Negative Electrode Mixture Layer>

The negative electrode slurry obtained above was applied to a stainless steel foil (thickness: 10 µm) as a current collector using a desktop coating machine (manufactured by Tester Sangyo Co., Ltd., FILM COATER, PI-1210), and it was preliminarily dried at 80°C for 10 minutes using a constant temperature dryer. After preliminary drying, a vacuum heat treatment was carried out using a vacuum constant temperature dryer at 240°C for 15 hours under vacuum to prepare a negative electrode mixture layer (electrode). The capacity density of the electrode was 1.0 mAh/cm².

### <Preparation of Negative Electrode Sheet>

The solid electrolyte solution prepared for the preparation of the solid electrolyte sheet was dropped onto the surface of the negative electrode mixture layer (electrode) obtained above, and by wire coating, the solid electrolyte solution was allowed to permeate and become uniform inside the negative electrode mixture layer, and at the same time, the excess portion of the solid electrolyte solution was removed. After that, using a constant temperature dryer, preliminary drying was carried out at 160°C for 2 hours under atmospheric pressure. This operation from applying the solid electrolyte solution to preliminary drying was repeated twice. After that, using a vacuum constant temperature dryer, vacuum heating and drying was carried out at 180°C for 15 hours under vacuum to prepare a negative electrode sheet in which a solid electrolyte layer was formed inside the negative electrode mixture layer. The steps were all carried out in a dry environment with a dew point of -60°C or lower.

### <Preparation of All-Solid-State Battery>

The negative electrode sheet obtained above was used as a test electrode, the solid electrolyte sheet obtained above was used as a separator layer, Li was used as a counter electrode, and these were laminated in this order to prepare an all-solid-state battery. Firstly, the solid electrolyte sheet obtained above was punched out using a handheld electrode punch (manufactured by Nogamigiken Co., Ltd.) to prepare a test sheet having a diameter of 13 mm. Further, the negative electrode sheet obtained above was also punched out using a handheld punch to prepare a disk-like test electrode having a diameter of 11 mm.

The solid electrolyte sheet having a diameter of 13 mm obtained by punching out using the handheld punch was placed on the negative electrode sheet having a diameter of 11 mm obtained by punching out in a manner such that the surface of the negative electrode mixture layer was in contact with the solid electrolyte sheet, and cold press pressure was applied to the sheets at 50 MPa using a uniaxial pressure press for powder molding to adhere to each other. Further, a Li foil having a diameter of 12 mm (manufactured by Honjo Metal Co., Ltd., thickness: 200 µm) was placed on the surface of the solid electrolyte sheet opposite to the negative electrode sheet side, and cold press pressure was again applied thereto at 20 MPa using the uniaxial pressure press for powder molding to obtain a laminate of the negative electrode sheet, solid electrolyte sheet, and Li. Regarding this laminate, a CR2032 type coin cell was prepared to obtain an all-solid-state battery. The steps were all carried out in a dry environment with a dew point of -60°C or lower.

### <Charge and Discharge Test>

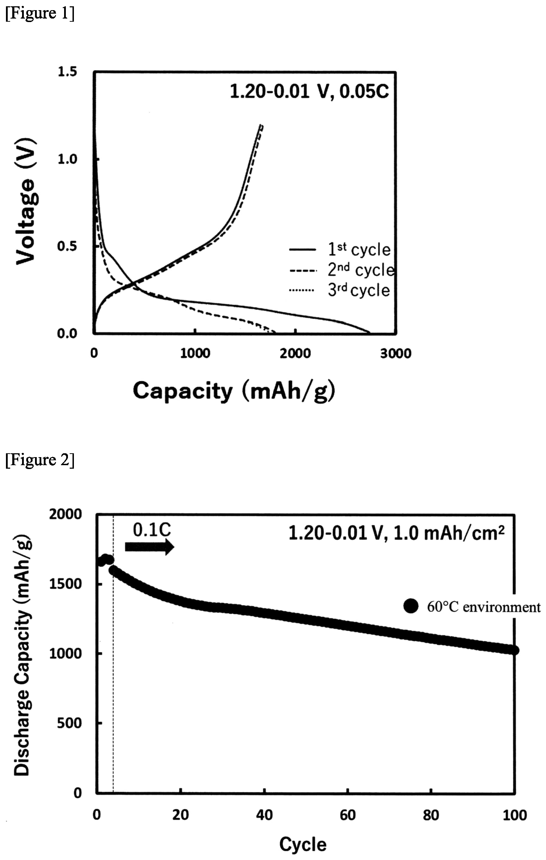

The all-solid-state battery obtained above was placed in a constant-temperature chamber with its temperature being set at 60°C, and a constant current charge and discharge test was conducted with a charge/discharge current of 0.05 mA/cm² and an operating voltage range of 1.20 to 0.01 V. Charging and discharging curves of the all-solid-state battery prepared in Example 1 are shown in Figure 1. The initial charge capacity was 2737 mAh/g, and the initial discharge capacity was 1651 mAh/g. It is understood from the results shown in Figure 1 that the all-solid-state battery prepared in Example 1 can perform charge/discharge stably in the second cycle or later.

Further, in the fourth cycle or later, the charge/discharge current was changed to 0.1 mA/cm², and charging/discharging was repeated. Figure 2 shows the cycle characteristics thereof, and it is understood that the all-solid-state battery prepared in Example 1 can perform charge/discharge stably without short circuiting during 100 cycles.

### (Comparative Example 1)

### <Preparation of Li Battery Using Electrolytic Solution>

The negative electrode mixture layer (electrode) obtained in <Preparation of Negative Electrode Mixture Layer> in Example 1 was punched out using a handheld electrode punch (manufactured by Nogamigiken Co., Ltd.) to prepare a disk-like test electrode having a diameter of 11 mm. A Li foil having a diameter of 14 mm (manufactured by Honjo Metal Co., Ltd., t=500 µm) was used as a counter electrode of this test electrode, a glass fiber filter having a diameter of 16 mm (manufactured by ADVANTEC, GA-100, t=500 µm) and a polyolefin-based microporous membrane (PP/PE/PP microporous membrane, t=25 µm) were used as a separator, 1 mol/L LiPF₆ EC/DEC (=50/50, Vol%) (manufactured by Kishida Chemical Co., Ltd., LBG-96533) was used as an electrolytic solution, and a CR2032 type coin cell (Li battery) was prepared. The steps were all carried out in a dry environment with a dew point of -60°C or lower.

### <Charge and Discharge Test>

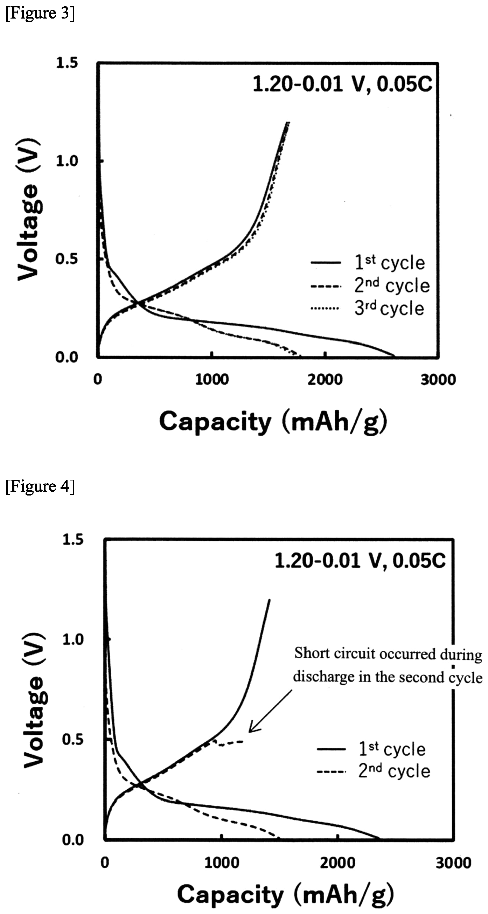

The Li battery obtained above was placed in a constant-temperature chamber with its temperature being set at 60°C, and a constant current charge and discharge test was conducted with a charge/discharge current of 0.05 mA/cm² and an operating voltage range of 1.20 to 0.01 V. Charging and discharging curves of the Li battery prepared in Comparative Example 1 are shown in Figure 3. The charging and discharging curves are similar to those in Figure 1, and the obtained discharge capacities are also similar to those in Figure 1. It is understood from the above-described results that the all-solid-state battery of Example 1 provides performance equivalent to that of the Li battery using the electrolytic solution, and that the solid electrolyte sheet prepared in Example 1 is useful for all-solid-state batteries. In addition, the Li battery of Comparative Example 1 using LiPF₆ as the electrolytic solution has poor high-temperature stability because the electrolytic solution reacts and decomposes and there is always a risk of liquid leakage, but there is no such concern with the all-solid-state battery using the solid electrolyte sheet prepared in Example 1.

### (Comparative Example 2)

### <Preparation of Coating Solution>

To an LCBH/MeOH solution whose solid content concentration was adjusted to 30 wt% in a manner similar to that in <Preparation of Solid Electrolyte Solution> in Example 1, nano-SiO₂ (Fumed silica, primary particle diameter: 5 to 50 nm, secondary particle diameter: about 300 nm) was added so that the mass ratio of LCBH:nano-SiO₂ became 80:20, and the container was lightly shaken by hand to disperse nano-SiO₂, and thus a coating solution was obtained. The steps were all carried out in a dry environment with a dew point of -60°C or lower.

### <Preparation of Negative Electrode Sheet>

To the surface of the negative electrode mixture layer (electrode) obtained in <Preparation of Negative Electrode Mixture Layer> in Example 1, the coating solution obtained above was applied by wire coating. After that, using a constant temperature dryer, preliminary drying was carried out at 160°C for 2 hours under atmospheric pressure. This operation from applying to preliminary drying was repeated five times, and finally, using a vacuum constant temperature dryer, vacuum heating and drying was carried out at 180°C for 15 hours under vacuum. Further, in order to densify the negative electrode sheet obtained above, roll pressing was carried out without heating, using a desktop hot roll press machine (manufactured by Hohsen Corporation, HSPR-60150HL-A), with a slit width between the rolls of 0 µm. Thus a negative electrode sheet in which a solid electrolyte layer was formed inside and on the surface of the negative electrode mixture layer was obtained. The steps were all carried out in a dry environment with a dew point of -60°C or lower.

### <Preparation of All-Solid-State Battery>

The negative electrode sheet obtained above was punched out using a handheld electrode punch (manufactured by Nogamigiken Co., Ltd.) to prepare a test sheet having a diameter of 12 mm. The test sheet having a diameter of 12 mm obtained by punching out using the handheld punch was placed on a Li foil having a diameter of 11 mm (manufactured by Honjo Metal Co., Ltd., thickness: 200 µm), and cold press pressure was applied thereto at 5 MPa using a uniaxial pressure press for powder molding to adhere to each other. Regarding this laminate, a CR2032 type coin cell was prepared to obtain an all-solid-state battery. The steps were all carried out in a dry environment with a dew point of -60°C or lower.

### <Charge and Discharge Test>

The all-solid-state battery obtained above was placed in a constant-temperature chamber with its temperature being set at 60°C, and a constant current charge and discharge test was conducted in a manner similar to that in Example 1. Charging and discharging curves of the all-solid-state battery prepared in Comparative Example 2 are shown in Figure 4. In the case of the all-solid-state battery prepared in Comparative Example 2, a short circuit was confirmed in the second cycle. Even when the method of the working example described in WO2020-184340 was applied to LCBH, good cycle performance was not successfully obtained. It can be said from the results that the solid electrolyte sheet is superior to the method for forming a solid electrolyte described in WO2020-184340.

## Claims

1. A solid electrolyte sheet to be used as a separator layer that separates a positive electrode layer from a negative electrode layer in an all-solid-state battery, the solid electrolyte sheet comprising a support base material and a boron cluster-type solid electrolyte.

2. The solid electrolyte sheet according to claim 1, wherein the support base material is a glass nonwoven fabric.

3. The solid electrolyte sheet according to claim 1 or 2, wherein a thickness of the support base material is 10 µm to 300 µm.

4. The solid electrolyte sheet according to any one of claims 1 to 3, wherein the boron cluster-type solid electrolyte is a solid electrolyte composite comprising LiCB₉H₁₀ and LiCB₁₁H₁₂, and wherein the molar ratio of LiCB₉H₁₀/LiCB₁₁H₁₂ is 1.1 to 20.

5. The solid electrolyte sheet according to claim 4, wherein the boron cluster-type solid electrolyte is a solid electrolyte composite comprising LiCB₉H₁₀ and LiCB₁₁H₁₂, and wherein the molar ratio of LiCB₉H₁₀:LiCB₁₁H₁₂ is 7:3.

6. An all-solid-state battery in which a positive electrode layer, a separator layer, and a negative electrode layer are laminated in this order, wherein the separator layer is the solid electrolyte sheet according to any one of claims 1 to 5.

7. A method for producing a solid electrolyte sheet, the method comprising:
a step of preparing a solid electrolyte solution obtained by dissolving a boron cluster-type solid electrolyte in a solvent; and
a step of obtaining a solid electrolyte sheet by applying the obtained solid electrolyte solution to a support base material, followed by drying,
wherein the solvent comprises at least one substance selected from the group consisting of water, an alcohol-based solvent, tetrahydrofuran, acetonitrile, toluene, N-methylpyrrolidone, dimethyl carbonate, and ethyl acetate.

8. The method according to claim 7, wherein the support base material is a glass nonwoven fabric.

9. The method according to claim 7 or 8, wherein a thickness of the support base material is 10 µm to 300 µm.

10. The method according to any one of claims 7 to 9, wherein the boron cluster-type solid electrolyte is a solid electrolyte composite comprising LiCB₉H₁₀ and LiCB₁₁H₁₂, and wherein the molar ratio of LiCB₉H₁₀/LiCB₁₁H₁₂ is 1.1 to 20.

11. The method according to claim 10, wherein the boron cluster-type solid electrolyte is a solid electrolyte composite comprising LiCB₉H₁₀ and LiCB₁₁H₁₂, and wherein the molar ratio of LiCB₉H₁₀:LiCB₁₁H₁₂ is 7:3.

12. The method according to any one of claims 7 to 11, wherein a solid content concentration of the solid electrolyte solution is 5% by mass to 70% by mass.

13. The method according to any one of claims 7 to 12, wherein said drying is carried out at 40°C to 200°C for 30 minutes to 5 hours under atmospheric pressure, and further at 100°C to 300°C for 1 to 30 hours under vacuum.

14. The method according to any one of claims 7 to 13, the method comprising a step of rolling and densifying the support base material using a roll press after said drying.
